# EUROPEAN PATENT SPECIFICATION

(11) **EP 3 806 287 B1**
(45) Date of publication and mention of the grant of the patent: **13.04.2022**
(21) Application number: 20200707.6
(22) Date of filing: 08.10.2020
(51) Int. Cl.: H02K 1/18, H02K 1/20, H02K 1/14

(54) **ELECTRIC-MACHINE STATOR LAMINATION, ELECTRIC-MACHINE STATOR IRON CORE AND ELECTRIC MACHINE**
ELEKTROMASCHINENSTATORBLECH, ELEKTROMASCHINENSTATOREISENKERN UND ELEKTROMASCHINE
TÔLE DE STATOR POUR MACHINE ÉLECTRIQUE, NOYAU DE FER DE STATOR DE MACHINE ÉLECTRIQUE ET MACHINE ÉLECTRIQUE

(30) Priority: 10.10.2019 CN 201910959949
(43) Date of publication of application: 14.04.2021
(73) Proprietor: Jing-Jin Electric Technologies Co., Ltd., Beijing 100016 (CN)
(72) Inventor: YU, Ping, BEIJING, Chaoyang District 100016 (CN); SU, Yixue, BEIJING, Chaoyang District 100016 (CN); CHENG, Yi, BEIJING, Chaoyang District 100016 (CN); WANG, Haibin, BEIJING, Chaoyang District 100016 (CN); LI, Baojiang, BEIJING, Chaoyang District 100016 (CN)
(74) Representative: Noréns Patentbyrå AB

(56) References cited:
- WO-A1-2017/055721
- CN-A- 109 687 672
- DE-A1- 10 125 612
- FR-A1- 2 975 239
- FR-A1- 2 975 240

## Description

### TECHNICAL FIELD

The present disclosure relates to the technical field of electric machines, and particularly relates to an electric-machine stator lamination, an electric-machine stator iron core and an electric machine.

### BACKGROUND

Along with the development of the automobile industry, the NVH performance of vehicles has become a comprehensive technical index for quality evaluation of modern car manufacturing. NVH is the abbreviation of Noise, Vibration, Harshness. NVH influences the user experience of the vehicle users most directly and most surfacially. The NVH problem of vehicles is one of the issues that gain the attention of large manufacturing enterprises of entire cars and component parts in the global car industry. Statistical data show that approximately 1/3 of the malfunctions of the entire car is related to the NVH problem of vehicles.

The main energization sources that influence the magnitude of internal car noise include the components such as the engine, the electric motor, the reducer and the tyres. Regarding electric vehicles, the main energization source is from the electric motor. A vehicle uses many electric motors, so the study on the noise and vibration of electric motors has become increasingly more important.

FR2975239A1 discloses a rotating electric machine including a rotating electric machine element selected from a stator element and a rotor element. The electric machine element has a portion on an outer surface for contacting with a reception layer formed with recesses. The recesses define a plurality of linear ribs between these grooves.

FR2975240A1 discloses a rotating electric machine including a rotating electric machine element, for example, a stator or a rotor. The element has a portion on an outer surface that is in contact with the receiving structure of a layer. This layer is formed with a group of recesses including circular holes. The recesses define concave nonlinear ridges between the recesses. The electric machine element includes a stator metal sheet, and the recesses are located in radial periphery of the sheet. The recesses are identical with each other and regularly distributed and directed within a portion of the layer.

WO2017055721A1 discloses an electric machine comprising at least one stator. The stator comprises a body and teeth arranged on the inner face of the body of the stator. The stator comprises at least one inner cavity filled with a filler material.

DE10125612A1 discloses an electric machine with a flattening structure, which has a stator with cooling channels and a rotor. The flattening structure is formed at one or more edges of the stator by reducing the cooling channels at this position. The cooling channels are arranged inside the stator. The cooling channels are groove-shaped and arranged on the side of the stator so as to be coverable.

CN109687672A discloses a low-noise synchronous magnetic resistance motor with good heat dissipation effect. The motor comprises: a casing, a stator core, a stator winding, a rotor assembly, a main shaft, a first heat dissipation hole, a second heat dissipation hole, a third heat dissipation hole, a curved heat sink, a sound absorbing hole, and a sound absorbing plug. The stator core is disposed in the casing, the stator winding is disposed on the stator core, and the stator core is provided with a rotor assembly that cooperates with the stator winding. The main shaft is disposed at both ends of the rotor assembly. The first heat dissipation hole is disposed on the casing, the second heat dissipation hole is disposed on the stator core, and the third heat dissipation hole is disposed on the rotor assembly. The sound absorption hole is disposed on the stator core and the rotor assembly, the sound absorbing plug is disposed in the sound absorbing hole, and the curved heat sink is disposed on the casing.

### SUMMARY

Aiming at the above problems in the prior art, the present disclosure provides an electric-machine stator lamination, an electric-machine stator iron core and an electric machine, which can effectively reduce the NVH of the electric machine.

To achieve the above object, the technical solutions of the present disclosure are realized by the invention as defined in the claims.

The invention provides an electric-machine stator lamination, wherein the yoke of the electric-machine stator lamination is circumferentially provided with a plurality of axial tunnels filled with a damping medium.

Optionally, cross-sections of the tunnels are approximately triangular, or trapezoidal, or rhombic.

Optionally, inner walls of the tunnels are smooth or uneven.

Optionally, edges of cross-sections of the tunnels are formed by a straight line and a curve.

According to the invention, edges of cross-sections of the tunnels are formed by wavy lines.

Optionally, edges of cross-sections of the tunnels are of a shape of teeth, and each of the teeth is T-shaped, or is I-shaped, or has a constant vertical width.

According to the invention, the yoke of the electric-machine stator lamination is circumferentially provided with a plurality of weight-reduction holes.

Optionally, an outer circumference of the electric-machine stator lamination is configured to be of a convex-concave shape.

Optionally, a cross-sectional shape of the weight-reduction holes and a cross-sectional shape of the tunnels are complementary, according to the invention the weight-reduction holes are provided in spacings between the tunnels.

Optionally, the yoke of the electric-machine stator lamination is circumferentially provided with a plurality of axial mounting holes, and/or the outer circumference of the electric-machine stator lamination is provided with a plurality of axial mounting holes.

The invention provides an electric-machine stator iron core, wherein the yoke of the electric-machine stator iron core is circumferentially provided with a plurality of axial tunnels filled with a damping medium.

Optionally, the electric-machine stator iron core comprises the above-described electric-machine stator lamination, a plurality of the electric-machine stator laminations are laminated to form the electric-machine stator iron core, and the tunnels of the electric-machine stator laminations are axially connected.

Optionally, an outer circumference of the electric-machine stator iron core is of a convex-concave shape.

Optionally, the weight-reduction holes of the electric-machine stator laminations form cooling channels, and a cooling medium flows in the cooling channels to cool the electric-machine stator iron core.

Optionally, a liquid or a gas flows in the cooling channels as the cooling medium.

A still another aspect of the present disclosure provides an electric machine, wherein the electric machine comprises an electric-machine housing and the above-described electric-machine stator iron core, the electric-machine stator iron core is fixed in the electric-machine housing, an outer circumference of the electric-machine stator iron core is of a convex-concave shape, the outer circumference of the electric-machine stator iron core and an inner wall of the electric-machine housing have gaps therebetween, and the gaps are empty or are filled with a damping medium.

Optionally, the damping medium is a solid, a paste or a fluid.

The present disclosure, by employing the above structure configuration, has the following advantages:
The present disclosure, by using the structure in which the electric-machine stator lamination is provided with the tunnels and the tunnels are empty or filled with the damping medium, can weaken the vibration energy generated by the stator to the electric-machine housing, increasing the damping coefficient of the electric-machine housing, reduces the response amplitude/frequency of the electric-machine housing, weaken the paths of the vibration/noise transmission , and reduce the response amplitudes, thereby inhibiting vibration and noise, to improve passenger comfortness

In the present disclosure, the outer circumference of the electric-machine stator lamination is configured to be of a convex-concave shape, and the outer circumference of the electric-machine stator iron core formed by laminating the electric-machine stator laminations is configured to be uneven. When the electric-machine stator iron core is installed into the electric-machine housing, the outer circumference of the electric-machine stator iron core and the inner wall of the electric-machine housing can have gaps therebetween, and the gaps are empty or are filled with the damping medium. The structure of the empty gaps or the gaps filled with the damping medium can weaken the vibration energy generated by the stator to the electric-machine housing, increasing the damping coefficient of the electric-machine housing, reduces the response amplitude/frequency of the electric-machine housing, weaken the paths of the vibration/noise transmission, and reduce the response amplitudes, thereby inhibiting vibration and noise, to improve passenger comfortness.

The present disclosure, when applied to occasions that have high requirements on the vibration and noise of the entire machine (entire car), can effectively reduce the overall NVH level.

The present disclosure has a simple structure and can be easily expanded, and the length of the stator iron core can be adjusted according to the practical conditions of usage without modifying the mold. The machining process is simple, has a reliable quality and a high efficiency.

The above description is merely a summary of the technical solutions of the present disclosure. In order to more clearly know the elements of the present disclosure to enable implementation according to the contents of the description, and in order to make the above and other purposes, features and advantages of the present disclosure more apparent and understandable, the particular embodiments of the present disclosure are provided below.

### BRIEF DESCRIPTION OF THE DRAWINGS

Fig. 1 is a front view of the electric-machine stator lamination according to the first embodiment of the present disclosure;
Fig. 2 is a front view of the electric-machine stator lamination according to the first embodiment of the present disclosure;
Fig. 3 is a front view of the electric-machine stator lamination according to the second embodiment of the present disclosure;
Fig. 4 is a schematic diagram of the assembling of the electric-machine stator and the electric-machine housing according to the second embodiment of the present disclosure; and
Fig. 5 is a partial enlarged view of Fig. 4.

In the drawings: 1. electric-machine stator lamination; 2. weight-reduction holes; 3. mounting holes; 4. electric-machine housing; 5. gaps; 6. tunnels; and 7. mounting holes.

### DETAILED DESCRIPTION

Aiming at the defects in the prior art that vehicles have high NVH levels, the present disclosure, by using the structure in which the electric-machine stator lamination is provided with the tunnels and the tunnels are empty or filled with the damping medium, can weaken the vibration energy of the stator iron core, increasing the damping coefficient of the stator iron core, reduce the response frequency of the stator iron core, weaken the paths of the transmission of vibration and noise, and reduce the response amplitude, to effectively reduce the overall NVH level.

In order to make the objects, the technical solutions and the advantages of the present disclosure clearer, the embodiments of the present disclosure will be described below in further detail in conjunction with the drawings.

### The first embodiment

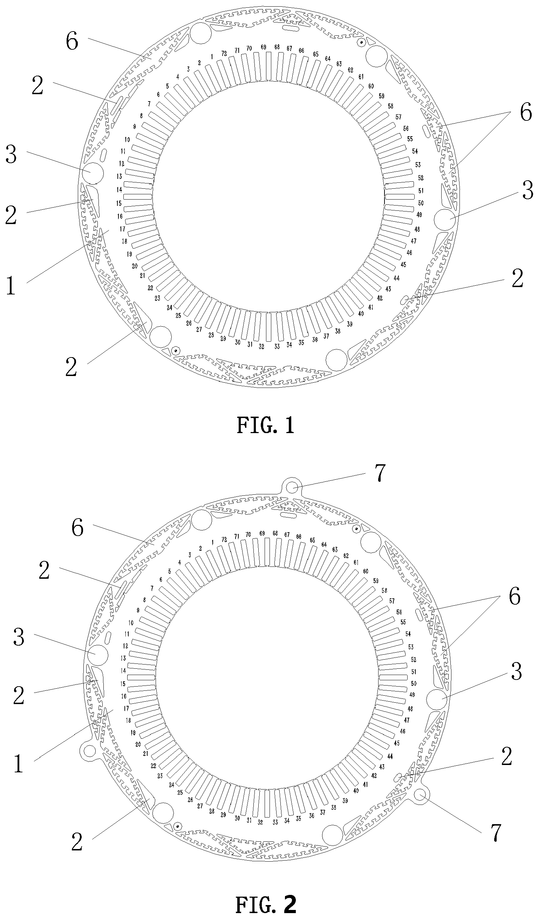

Fig. 1 shows the first embodiment of the present disclosure. The present embodiment provides an electric-machine stator lamination 1, wherein the yoke of the electric-machine stator lamination 1 is circumferentially provided with a plurality of axial tunnels 6, and the tunnels 6 are filled with a damping medium.

The inventor has found out by studying that the source of the electromagnetic noise emitted by electric machines is the vibration of the stator, which drives the air around the electric-machine housing to vibrate, to cause the noise. The structure of the present embodiment in which the tunnels 6 are filled with the damping medium can increase the damping coefficient of the stator iron core, thin the connecting ribs inside the stator iron core, and weaken the rigid connection.

The filling of the damping medium is usually performed after the electric-machine stator laminations 1 have been laminated to form the electric-machine stator iron core. The damping medium may be a solid, a paste or a fluid, for example, by using materials such as rubber, silica gel, a lubricating grease and silicone oil. When a solid is employed, for example, a paste is injected into the tunnels 6, and the paste, after being solidified, can be fixedly connected to the stator iron core.

The cross-sections of the tunnels 6 are approximately triangular, or trapezoidal, or rhombic, or may be designed to be another suitable shape, for example rectangular. The inner walls of the tunnels 6 may be designed to be smooth or uneven.

Furthermore, all of the cross-sections of the tunnels 6 are chamfered, to optimize the structure, and prevent stress from concentrating to cause cracks.

Optionally, the edges of the cross-sections of the tunnels 6 are formed by a straight line and a curve. edges of the cross-sections of the tunnels 6 are formed by wavy lines. The above technical means can guarantee the sufficient contact between the damping medium and the electric-machine stator lamination 1, and can also improve the strength of the joining of the damping medium and the electric-machine stator lamination 1.

Alternatively, the edges of the cross-sections of the tunnels 6 are of a shape of teeth, and each of the teeth is T-shaped, or is I-shaped, or has a constant vertical width. The above technical means can guarantee the sufficient contact between the damping medium and the electric-machine stator lamination 1, and can also improve the strength of the joining of the damping medium and the electric-machine stator lamination 1.

In the present embodiment, the cross-sections of the tunnels 6 are approximately rhombic, and the edges are formed by dentate lines.

As shown in Fig. 1, the yoke of the electric-machine stator lamination 1 is circumferentially provided with a plurality of weight-reduction holes 2. On the precondition that the requirements on the structural strength are satisfied, the weight-reduction holes 2 can reduce the weight of the electric-machine stator lamination 1.

The cross-sectional shape of the weight-reduction holes 2 and the cross-sectional shape of the tunnels 6 are complementary, and the weight-reduction holes 2 are provided in the spacings between the tunnels 6. Accordingly, the weight-reduction holes 2 and the tunnels 6 can sufficiently occupy the cross-sectional area of the electric-machine stator lamination 1.

The weight-reduction holes 2 may have various cross-sectional shapes, such as an approximate triangle and an oblong hole.

As shown in Fig. 1, the yoke of the electric-machine stator lamination 1 is circumferentially provided with a plurality of axial mounting holes 3. After the electric-machine stator laminations 1 have been laminated to form the electric-machine stator iron core, the mounting holes 3 may be used to connect to the electric-machine housing or other components to form the finished product of the electric machine.

Alternatively, as shown in Fig. 2, the outer circumference of the electric-machine stator lamination 1 is provided with a plurality of axial mounting holes 7. After the electric-machine stator laminations 1 have been laminated to form the electric-machine stator iron core, the mounting holes 7 are suitable for mounting some special structures.

The tunnels 6, the weight-reduction holes 2 and the mounting holes 3 may be integrally formed when the electric-machine stator lamination 1 is being manufactured.

By verification by using measured data, the test result of the NVH of the electric machine according to the present embodiment is as follows:
Regarding 48-order radial and axial noises, the effect of noise mitigation is significant: all of the amplitudes of noise reduction at the frequencies of a breathing mode are 3-5dBA. That enables the electric machine to, in the worst working condition of vibration and noise, have a good NVH performance.
Regarding 96-order radial and axial noises, the amplitudes of noise reduction are commonly 4-13dBA, which demonstrates a relatively satisfactory effect of noise mitigation.

The inner wall of the electric-machine stator lamination 1 may further be provided with stator slots, to form a complete electric-machine stator lamination, which may refer to the prior art, and is not described in detail in the present embodiment.

The present embodiment, by using the structure in which the electric-machine stator lamination is provided with the tunnels and the tunnels are filled with the damping medium, can weaken the vibration energy of the stator iron core, increase the damping coefficient of the stator iron core, reduce the response frequency of the stator iron core, weaken the paths of the transmission of vibration and noise, and reduce the amplitude values of responses, thereby inhibiting vibration and noise, to improve passenger comfortness.

### The second embodiment

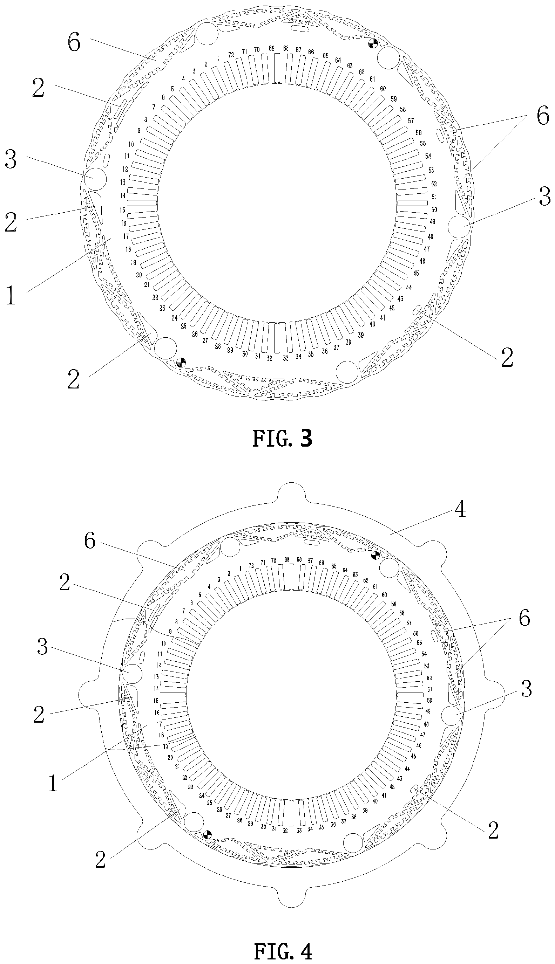

Fig. 3 shows the second embodiment of the present disclosure. The second embodiment differs from the first embodiment in that: the outer circumference of the electric-machine stator lamination 1 is configured to be of a convex-concave shape.

After the electric-machine stator laminations 1 have been laminated to form the electric-machine stator iron core, the outer circumference of the electric-machine stator iron core is of a convex-concave shape.

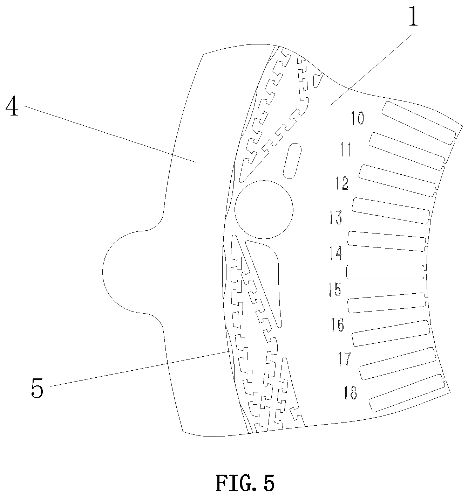

As shown in Figs. 4 and 5, the electric-machine stator iron core is fixed in the electric-machine housing 4, and the outer circumference of the electric-machine stator iron core and the inner wall of the electric-machine housing 4 have gaps 5 therebetween.

The gaps 5 are empty or are filled with a damping medium. The damping medium is a solid, a paste or a fluid. In the present embodiment, the filling of the damping medium is performed after the assembling of the electric-machine stator and the electric-machine housing 4.

The weight-reduction holes 2 of the electric-machine stator laminations 1 form cooling channels, and a cooling medium flows in the cooling channels to cool the electric-machine stator iron core.

A liquid (for example water or oil, or another suitable cooling liquid) or a gas flows in the cooling channels, as the cooling medium, to reduce the temperature of the electric machine in operation.

The sealing of the cooling channels requires sealing rings or sealing blocks at the ends, and the sealing rings or the sealing blocks may be provided on the electric-machine stator iron core or on the end cover of the electric machine.

The convex-concave structure of the outer circumference the electric-machine stator lamination 1 may be integrally formed when the electric-machine stator lamination 1 is being manufactured.

By verification by using measured data, the test result of the NVH of the electric machine according to the present embodiment is as follows:
Regarding 48-order radial and axial noises, the effect of noise mitigation is significant: all of the amplitudes of noise reduction at the frequencies of a breathing mode are 3-5dBA. That enables the electric machine to, in the worst working condition of vibration and noise, have a good NVH performance.
Regarding 96-order radial and axial noises, the amplitudes of noise reduction are commonly 4-13dBA, which demonstrates a relatively satisfactory effect of noise mitigation.

The present embodiment, by using the structure in which the outer circumference of the electric-machine stator iron core and the inner wall of the electric-machine housing have gaps therebetween, and the gaps are filled with the damping medium, can weaken the vibration energy generated by the stator to the electric-machine housing, increasing the damping coefficient of the electric-machine housing, reduces the response amplitude/frequency of the electric-machine housing, weaken the paths of the vibration/noise transmission , and reduce the response amplitudes, thereby inhibiting vibration and noise, to improve passenger comfort.

The other structures of the electric-machine stator lamination according to the second embodiment are the same as those of the first embodiment, and are not described repeatedly here.

### The third embodiment

The third embodiment of the present disclosure provides an electric-machine stator iron core. The electric-machine stator iron core comprises the electric-machine stator lamination 1 according to the first embodiment or the second embodiment. A plurality of the electric-machine stator laminations 1 are laminated to form the electric-machine stator iron core. The tunnels of the electric-machine stator laminations 1 are axially connected, whereby axial tunnels are formed at the yoke of the electric-machine stator iron core. The tunnels are filled with a damping medium.

The structure of the electric-machine stator lamination according to the third embodiment is the same as that of the first embodiment or the second embodiment, and is not described repeatedly here.

### The fourth embodiment

The fourth embodiment of the present disclosure provides an electric-machine stator iron core. The electric-machine stator iron core is integrally manufactured, such as being integrally cut, being integrally cast, and so on.

The yoke of the electric-machine stator iron core is circumferentially provided with a plurality of axial tunnels, and the tunnels are filled with a damping medium. The structure of the tunnels are configured by referring to the tunnels 6 of the electric-machine stator lamination 1 according to the first embodiment, and the damping medium is configured by referring to the damping medium according to the first embodiment.

The tunnels may be obtained by post-processing, and may also be obtained in the manufacturing of the electric-machine stator iron core.

The yoke of the electric-machine stator iron core is provided with weight-reduction holes and may be provided mounting holes, or the outer circumference of the electric-machine stator iron core may be provided with a plurality of axial mounting holes. The structures of the weight-reduction holes and the mounting holes may be configured by referring to the corresponding structures of the electric-machine stator lamination 1 according to the first embodiment.

Preferably, in the present embodiment, the outer circumference of the electric-machine stator iron core is of a convex-concave shape.

### The fifth embodiment

The fifth embodiment of the present disclosure provides an electric machine. The electric machine comprises an electric-machine housing 4 and the electric-machine stator iron core according to the third embodiment or the fourth embodiment. As shown in Figs. 4 and 5, the electric-machine stator iron core is fixed in the electric-machine housing 4, the outer circumference of the electric-machine stator iron core is of a convex-concave shape, the outer circumference of the electric-machine stator iron core and the inner wall of the electric-machine housing 4 have gaps 5 therebetween, and the gaps 5 are empty or are filled with a damping medium.

In the present embodiment, the filling of the damping medium is performed after the assembling of the electric-machine stator and the electric-machine housing 4.

The gaps 5 have a small size. Preferably, the gaps 5 are continuous in the axial direction, and are not continuous in the circumferential direction. Accordingly, the gaps 5 do not affect the fixing in the radial direction in the electric-machine housing 4 of the electric-machine stator iron core.

The structure of the electric-machine stator iron core according to the fifth embodiment is the same as that of the third embodiment or the fourth embodiment, and is not described repeatedly here.

The above are merely particular embodiments of the present disclosure. By the teaching of the present disclosure, a person skilled in the art can make other modifications or variations on the basis of the above embodiments. A person skilled in the art should understand that the above particular descriptions are only for the purpose of better interpreting the present disclosure, and the protection scope of the present disclosure should be subject to the protection scope of the claims.

## Claims

1. An electric-machine stator lamination (1), wherein
the yoke of the electric-machine stator lamination (1) is circumferentially provided with a plurality of axial tunnels (6) for weakening vibration energy generated by the electric-machine stator lamination (1);
the tunnels (6) are filled with a damping medium;
**characterised in that**
edges of cross-sections of the tunnels (6) are formed by wavy lines;
a yoke of the electric-machine stator lamination (1) is circumferentially provided with a plurality of weight-reduction holes (2) for reducing a weight of the electric-machine stator lamination (1); and
the weight-reduction holes (2) are provided in spacings between the tunnels (6).

2. The electric-machine stator lamination (1) according to claim 1, **characterized in that**: inner walls of the tunnels (6) are smooth or uneven.

3. The electric-machine stator lamination (1) according to claim 1, **characterized in that**: all of the cross-sections of the tunnels (6) are chamfered.

4. The electric-machine stator lamination (1) according to claim 1, **characterized in that**: the yoke of the electric-machine stator lamination (1) is circumferentially provided with a plurality of axial mounting holes (3).

5. The electric-machine stator lamination (1) according to claim 1, **characterized in that**: an outer circumference of the electric-machine stator lamination (1) is provided with a plurality of axial mounting holes (7).

6. The electric-machine stator lamination (1) according to claim 1, **characterized in that**: an outer circumference of the electric-machine stator lamination (1) is configured to be of a convex-concave shape.

7. An electric-machine stator iron core, wherein
a yoke of the electric-machine stator iron core is circumferentially provided with a plurality of axial tunnels (6) for weakening vibration energy generated by the electric-machine stator iron core;
the tunnels (6) are filled with a damping medium;
**characterised in that**
edges of cross-sections of the tunnels (6) are formed by wavy lines;
a yoke of the electric-machine stator iron core is circumferentially provided with a plurality of weight-reduction holes (2) for reducing a weight of the electric-machine stator iron core; and
the weight-reduction holes (2) are provided in spacings between the tunnels (6).

8. The electric-machine stator iron core according to claim 7, **characterized in that**: the electric-machine stator iron core comprises the electric-machine stator lamination (1) according to any one of claims 1-6, a plurality of the electric-machine stator laminations (1) are laminated to form the electric-machine stator iron core, and the tunnels (6) of the electric-machine stator laminations (1) are axially connected;
or, the electric-machine stator iron core is integrally manufactured.

9. An electric machine, **characterized in that**: the electric machine comprises an electric-machine housing (4) and the electric-machine stator iron core according to claim 7 or 8, the electric-machine stator iron core is fixed in the electric-machine housing (4), an outer circumference of the electric-machine stator iron core is of a convex-concave shape, the outer circumference of the electric-machine stator iron core and an inner wall of the electric-machine housing (4) have gaps (5) therebetween, and the gaps (5) are empty or are filled with a damping medium.

10. The electric machine according to claim 9, **characterized in that**: the gaps (5) are continuous in an axial direction, and are not continuous in a circumferential direction.

## Patentansprüche

1. Elektromaschinen-Statorblech (1), wobei
das Joch des Elektromaschinen-Statorblechs (1) in Umfangsrichtung mit mehreren axialen Tunneln (6) versehen ist, um die von dem Elektromaschinen-Statorblech (1) erzeugte Schwingungsenergie zu schwächen;
die Tunnel (6) mit einem Dämpfungsmedium gefüllt sind;
**dadurch gekennzeichnet, dass**
die Kanten der Querschnitte der Tunnel (6) durch Wellenlinien gebildet werden;
ein Joch des Elektromaschinen-Statorblechs (1) in Umfangsrichtung mit mehreren Gewichtsreduktionslöchern (2) versehen ist, um das Gewicht des Elektromaschinen-Statorblechs (1) zu reduzieren; und
die Gewichtsreduzierungslöcher (2) in Abständen zwischen den Tunneln (6) vorgesehen sind.

2. Elektromaschinen-Statorblech (1) nach Anspruch 1, **dadurch gekennzeichnet, dass**: die Innenwände der Tunnel (6) glatt oder uneben sind.

3. Elektromaschinen-Statorblech (1) nach Anspruch 1, **dadurch gekennzeichnet, dass**: alle Querschnitte der Tunnel (6) abgeschrägt sind.

4. Elektromaschinen-Statorblech (1) nach Anspruch 1, **dadurch gekennzeichnet, dass**: das Joch des Elektromaschinen-Statorblechs (1) in Umfangsrichtung mit mehreren axialen Befestigungslöchern (3) versehen ist.

5. Elektromaschinen-Statorblech (1) nach Anspruch 1, **dadurch gekennzeichnet, dass**: ein Außenumfang des Elektromaschinen-Statorblechs (1) mit mehreren axialen Befestigungslöchern (7) versehen ist.

6. Elektromaschinen-Statorblech (1) nach Anspruch 1, **dadurch gekennzeichnet, dass**: ein Außenumfang des Elektromaschinen-Statorblechs (1) konvexkonkav geformt ist.

7. Elektromaschinen-Statoreisenkern, wobei
ein Joch des Elektromaschinen-Statoreisenkerns in Umfangsrichtung mit mehreren axialen Tunneln (6) versehen ist, um von dem Elektromaschinen-Statoreisenkern erzeugte Schwingungsenergie zu schwächen;
die Tunnel (6) mit einem Dämpfungsmedium gefüllt sind;
**dadurch gekennzeichnet, dass**:
die Kanten der Querschnitte der Tunnel (6) durch Wellenlinien gebildet werden;
ein Joch des Elektromaschinen-Statoreisenkerns in Umfangsrichtung mit mehreren Gewichtsreduktionslöchern (2) versehen ist, um das Gewicht des Elektromaschinen-Statoreisenkerns zu reduzieren; und
die Gewichtsreduzierungslöcher (2) in Abständen zwischen den Tunneln (6) vorgesehen sind.

8. Elektromaschinen-Statoreisenkern nach Anspruch 7, **dadurch gekennzeichnet, dass**: der Elektromaschinen-Statoreisenkern das Elektromaschinen-Statorblech (1) nach einem der Ansprüche 1 bis 6 umfasst, mehrere Elektromaschinen-Statorbleche (1) zur Bildung des Elektromaschinen-Statoreisenkerns laminiert sind und die Tunnel (6) der Elektromaschinen-Statorbleche (1) axial verbunden sind;
oder der Elektromaschinen-Statoreisenkern einstückig hergestellt ist.

9. Eine elektrische Maschine, **dadurch gekennzeichnet, dass**: die elektrische Maschine ein Elektromaschinengehäuse (4) und den Elektromaschinen-Statoreisenkern nach Anspruch 7 oder 8 umfasst, der Elektromaschinen-Statoreisenkern in dem Elektromaschinengehäuse (4) befestigt ist, ein Außenumfang des Elektromaschinen-Statoreisenkerns eine konvex-konkave Form aufweist, zwischen dem Außenumfang des Elektromaschinen-Statoreisenkerns und der Innenwand des Elektromaschinengehäuses (4) Spalte (5) vorhanden sind und die Spalte (5) leer sind oder mit einem Dämpfungsmedium gefüllt sind.

10. Elektrische Maschine nach Anspruch 9, **dadurch gekennzeichnet, dass**: die Spalte (5) in axialer Richtung durchgehend sind und in Umfangsrichtung nicht durchgehend sind.

## Revendications

1. Tôle de stator (1) pour machine électrique, dans laquelle :
la fourche de la tôle de stator (1) pour machine électrique est prévue de manière circonférentielle avec une pluralité de tunnels axiaux (6) pour affaiblir l'énergie vibratoire générée par la tôle de stator (1) pour machine électrique ;
les tunnels (6) sont remplis avec un milieu d'amortissement ;
**caractérisée en ce que** :
les bords des sections transversales des tunnels (6) sont formés par des lignes ondulées ;
une fourche de la tôle de stator (1) pour machine électrique est prévue, de manière circonférentielle, avec une pluralité de trous de réduction de poids (2) pour réduire un poids de la tôle de stator (1) pour machine électrique ; et
les trous de réduction de poids (2) sont prévus dans des espacements entre les tunnels (6).

2. Tôle de stator (1) pour machine électrique selon la revendication 1, **caractérisée en ce que** :
les parois internes des tunnels (6) sont lisses ou irrégulières.

3. Tôle de stator (1) pour machine électrique selon la revendication 1, **caractérisée en ce que** :
toutes les sections transversales des tunnels (6) sont chanfreinées.

4. Tôle de stator (1) pour machine électrique selon la revendication 1, **caractérisée en ce que** :
la fourche de la tôle de stator (1) pour machine électrique est prévue, de manière circonférentielle, avec une pluralité de trous de montage axiaux (3).

5. Tôle de stator (1) pour machine électrique selon la revendication 1, **caractérisée en ce que** :
une circonférence externe de la tôle de stator (1) pour machine électrique est prévue avec une pluralité de trous de montage axiaux (7).

6. Tôle de stator (1) pour machine électrique selon la revendication 1, **caractérisée en ce que** :
une circonférence externe de la tôle de stator (1) pour machine électrique est configurée pour avoir une forme convexe-concave.

7. Noyau de fer de stator de machine électrique, dans lequel :
une fourche du noyau de stator de machine électrique est prévue, de manière circonférentielle, avec une pluralité de tunnels axiaux (6) pour affaiblir l'énergie vibratoire générée par le noyau de fer de stator de machine électrique ;
les tunnels (6) sont remplis avec un milieu d'amortissement ;
**caractérisé en ce que** :
les bords des sections transversales des tunnels (6) sont formés par des lignes ondulées ;
une fourche du noyau de fer de stator de machine électrique est prévue, de manière circonférentielle, avec une pluralité de trous de réduction de poids (2) pour réduire un poids du noyau de fer de stator de machine électrique ; et
les trous de réduction de poids (2) sont prévus dans des espacements entre les tunnels (6).

8. Noyau de fer de stator de machine électrique selon la revendication 7, **caractérisé en ce que** :
le noyau de fer de stator de machine électrique comprend la tôle de stator (1) pour machine électrique selon l'une quelconque des revendications 1 à 6, une pluralité de tôles de stator (1) pour machine électrique sont déposées en couche pour former le noyau de fer de stator de machine électrique et les tunnels (6) des tôles de stator (1) pour machine électrique sont raccordés de manière axiale ;
ou bien le noyau de fer de stator de machine électrique est fabriqué de manière solidaire.

9. Machine électrique **caractérisée en ce que** : la machine électrique comprend un boîtier de machine électrique (4) et le noyau de fer de stator de machine électrique selon la revendication 7 ou 8, le noyau de fer de stator de machine électrique est fixé dans le boîtier de machine électrique (4), une circonférence externe du noyau de fer de stator de machine électrique a une forme convexe-concave, la circonférence externe du noyau de fer de stator de machine électrique et une paroi interne du boîtier de machine électrique (4) présentent des espaces (5) entre elles, et les espaces (5) sont vides ou sont remplis avec un milieu d'amortissement.

10. Machine électrique selon la revendication 9, **caractérisée en ce que** : les espaces (5) sont continus dans une direction axiale, et ne sont pas continus dans une direction circonférentielle.
